Europäisches Patentamt

European Patent Office

Office européen des brevets

(11) Publication number: **0 573 680 A1**

## EUROPEAN PATENT APPLICATION

(21) Application number: **92109498.3**

(22) Date of filing: **05.06.92**

(51) Int. Cl.⁵: **C08L 67/02**, C08L 69/00

(43) Date of publication of application:
**15.12.93 Bulletin 93/50**

(84) Designated Contracting States:
**DE ES FR GB IT NL**

(71) Applicant: **GENERAL ELECTRIC COMPANY**
**1 River Road**
**Schenectady, NY 12345(US)**

(72) Inventor: **Steendam, Wilhelmus Johannes**
**Daniel**
**General Electric Plastics B.V.,**
**P.O. Box 117**
**NL-4600 AC Bergen op Zoom(NL)**
Inventor: **Mooijman, Frank Robert**
**General Electric Plastics B.V.,**
**P.O. Box 117**
**NL-4600 AC Bergen op Zoom(NL)**
Inventor: **Kempers, Torben Paul**
**General Electric Plastics B.V.,**
**P.O. Box 117**
**NL-4600 AC Bergen op Zoom(NL)**

(74) Representative: **Pratt, Richard Wilson et al**
**London Patent Operation**
**G.E. Technical Services Co. Inc.**
**Essex House**
**12/13 Essex Street**
**London WC2R 3AA (GB)**

(54) Impact modified polyester and/or polycarbonate.

㉗ The invention provides a polyester and/or polycarbonate composition which contains an impact modifier in an impact modifying amount, wherein the impact modifier is a synergistic mixture of (1) an ABS polymer and (2) a terpolymer of (a) ethylene, a monomer which contains a heterocycle containing one oxygen atom as the hetero-atom and optionally one or more further monomers.

EP 0 573 680 A1

This invention relates to impact modified polyesters and/or polycarbonate.

Polyesters and/or polycarbonates are thermoplastic materials having good mechanical properties and flow properties (in the melt). In order to improve the toughness an impact modifier is usually added to polyesters and/or blends of polyesters and polycarbonates. Several impact modifiers have been used previously, including acrylonitrile-butadiene-styrene (ABS) which is customarily used in polyester compositions like polybutylene terephalate compositions. A special kind of ABS-graft polymers has been disclosed as impact modifiers in EP-A-0022216. A further problem is that for some uses good impact strength is desired. For notched impact tests there is a very strong concentration effect caused by the notch in the test, and therefore the material strain is constrained entirely in the middle of the specimen bar, and around the fracture surface. A charpy impact strength of at least 25 J/m which is needed for some purposes, can be obtained with high percentages of ABS polymers or the like, but in that case the flow properties suffer severely. Accordingly, there is a need for an impact modifier for polyesters and similar polymers like polycarbonates and polyestercarbonates which in moderate contents provides the desired high impact values, without effecting the flow properties. The addition of ABS-like impact modifiers to polymers like polyesters and polycarbonates results in improvement of the impact properties. The compositions however becomes rather sensitive to the conditions under which it is molded i.e. if it is molded under severe conditions its ductile/brittle transition temperature increases considerably.

Surprisingly it has now been found that a group of specific terpolymers in combination with the ABS polymers show a completely unexpected synergistic effect so that with these combinations good impact values at room temperature can easily be attained at relative low concentrations. Moreover the ductile-brittle transition temperature of above mentioned compositions is less sensitive for the molding conditions.

Thus, the invention provides an impact modified polyester and/or polycarbonate and/or polyestercarbonate composition containing an impact modifier in an impact modifying amount, wherein the impact modifier is a synergistic mixture of (1) an ABS polymer and (2) a polymer derived from ethylene, a monomer (M) which contains a heterocyclic group containing one oxygen atom as the hetero-atom and optionally one or more further monomers.

Component (1) is one of the usual impact modifiers for this purpose and can be one of the several types of ABS polymers, for instance of the graft or core-shell type.

Component (2) is a polymer wherein the greater parts of the monomers (more than 50% by weight) is derived from ethylene and 1-15 % by weight more preferably 3-12% by weight of the monomers is derived from monomer (M). By "lower alkyl acrylate" or "lower alkyl methacrylate" is understood here a $C_1$-$C_4$ alkyl ester of acrylic or methacrylic acid.

Monomer (M) can contain the heterocycle as part of the main polymer chain or in a pendant group. An example of the first possibility is maleic anhydride, and a particularly suitable pendant heterocylic group is the glycidyl residue. A particularly preferred monomer (M) is glycidyl methacrylate.

Some of these terpolymers are commercially available and all these terpolymers will be produced according to well-known processes.

The weight ratio between components (1) and (2) can vary within wide limits, but is preferably 10:1 to 1:1.5 and more preferably 8:1 to 1:1.

As mentioned hereinabove, the impact modifying synergistic mixture should be used in an impact modifying amount. This amount can also vary within wide limits, and will also depend on the influence on other physical properties which can be tolerated. In general the synergistic combination of the present invention will be used in a total amount of 6-25 weight percent with respect to the total quantity of polymeric components. Amounts of less than 6 % usually will not have sufficient impact modifying effect and amounts of substantially over 25 % will tend to unduly affect other desirable properties. Preferably the amount of the synergistic combination is 10-20 %.

The invention deals with compositions which comprise a polyester, a polycarbonate, a polyester carbonate or a combination of said polymers. Suitable polyesters are polyesters derived from an aromatic dicarboxylic acid like phthalic acid and a diol. Suitable diols are alkanediols like butanediol and ethanediol, cyclohexanedimethanol and other non-aromatic diol compounds. In case one uses the polyester alone i.e. not in combination with a polycarbonate, the diol can not be butanediol. The use of a polyester derived from butane diol and terephthalic acid together with the synergistic combination of impact modifiers as claimed in the present invention has been described already in non-prepublished European patent application 90125464.

Suitable polycarbonates include the aromatic polycarbonates derived from an aromatic diphenol and a carbonate precursor like phosgene. Said polycarbonates may comprise some ester bonds also, e.g. up to 50 mol% of the carbonate bonds may be replaced by ester bonds. In that case the man of the art refers to polyester carbonates.

Of course, the compositions of the invention may contain further usual additives, such as anti-oxidants, fillers, reinforcing fillers, stabilizers, dyes and pigments, plasticizers, mold release agents, lubricants, antistatic agents, flame retardants, paint adhesion promotors and the like.

The following examples are intended to elucidate the present invention. However, the invention is not limited by these examples in any way.

In the examples the following components have been used:

| | |
|---|---|
| - PET | polyethyleneterephthalate |
| - ABS | a graft copolymer with a butadiene graft base (70 % by weight) upon which have been grafted styrene and acrylonitrile. |
| - PCT | poly dimethylcylohexylene terephthalate |
| - PC-1 | an aromatic polycarbonate with an IV of 0.585 dl/g as measured in $CH_2Cl_2$ at 25°C |
| - PC-2 (PC 125) | an aromatic polycarbonate with an IV of 0.49dl/g as measured in $CH_2Cl_2$ at 25°C |
| - PBT-1 | a polybutylene terephthalate with a weight average molecular weight of about 105.000, measured with GPC relative to polystyrene. |
| - PBT-2 | a polybutylene terephthalate with a weight average molecular weight of about 81.000 |
| - IM | an impact modifier in the form of a ter polymer of ethylene with about 26% by weight ethyl acrylate and about 7% by weight glycidylmethacrylate. |
| - STAB-1 | a mixture of usual stabilisers for polyesters and/or polycarbonates. |
| - STAB-2 | A second mixture of usual stabilisers with other usual additives. |

Examples I - IV; comparative examples A-D

Several compositions have been prepared while using the above mentioned ingredients in the quantities as indicated in tabel A. The compositions have been prepared by compounding the ingredients in a usual extruder for compounding polyester based compositions. The extrudate was pelletized.

Out of the obtained pellets standarised test specimen have been injection molded for determining the notched Izod impact values at room temperature and at 0°C. The melt viscosity has been determined according to ISO 1133 with a Göttfort viscosimeter.

The obtained results are shown in Table A also.

## Table A

| Example | A | B | I | II | C | D | III | IV |
|---|---|---|---|---|---|---|---|---|
| **Composition parts by weight** | | | | | | | | |
| . PET | 84.7 | 79.7 | 84.7 | 84.7 | – | – | – | – |
| . PCT | – | – | – | – | 84.7 | 79.7 | 84.7 | 84.7 |
| . ABS | 15 | 20 | 10 | 12 | 15 | 20 | 10 | 12 |
| . IM | – | – | 5 | 3 | – | – | 5 | 3 |
| . STAB-1 | 0.3 | 0.3 | 0.3 | 0.3 | 0.3 | 0.3 | 0.3 | 0.3 |
| **Properties** | | | | | | | | |
| Melt viscosity index (cc/10 min) at 265°C/50 N; 4 min | 80 | 35 | 37 | 42 | – | – | – | – |
| at 300°C/21.6N; 4 min | – | – | – | – | 22 | 13 | 17 | 14 |
| **Izod Notched Impact (J/m)** | | | | | | | | |
| at roomtemp. | 826 | 895 | 899 | 875 | 80 | 122 | 129 | 134 |
| at 0°C | 109 | 885 | 880 | 869 | 87 | 104 | 107 | 141 |

As can be seen from the results of Table A, in particular the Izod notched impact values at 0°C, it is possible with the combination according to the invention (i.e. in the examples ABS plus IM) to obtain the same good values at a lower concentration of ABS plus IM as compared to the case where one uses ABS only. At such lower concentrations the blends show a better flow (compare examples I and II with B and III and IV with D).

Examples V en VI, comparative example E.

In a similar way as indicated for examples I - IV and comparative examples A-D, several compositions were prepared as indicated in Table B. Out of the compositions test specimen were molded for determining the Izod notched impact values at different temperatures. The temperature at which the fracture behaviour changed from ductile to brittle was determined (D/B transition temperature). The lower this temperature the better. Of each composition two series of specimen were made by injection molding; one series under normal conditions i.e. molding temperature at the exit of the nozzle of 225°C, residence time in the barrel two minutes, the other series under abusive conditions i.e. 285°C, residence time 10 minutes.

The obtained results are shown in table B also.

4

## Table B

| Example | E | V | VI |
|---|---|---|---|
| **Composition (parts by weight)** | | | |
| . PC-1 | 20 | 20 | 20 |
| . PC-2 | – | – | – |
| . PBT-1 | 30 | 30 | 30 |
| . PBT-2 | 30 | 30 | 30 |
| . ABS | 17.5 | 15.5 | 13.5 |
| . IM | – | 2 | 4 |
| . STAB-2 | 2.5 | 2.5 | 2.5 |
| **Properties** | | | |
| . MVI (cc/10 min) at 250°C/50N; 4 min | 13.7 | 9.3 | 8.6 |
| . D/B (°C) after standard molding | -31 | -34 | -38 |
| after abusive molding | + 5 | -13 | -20 |

As can be seen from the results of table B the combination according to the invention (in the examples ABS plus IM), results in a slightly improved ductile/brittle temperature. More important the combination according to the invention makes the composition less sensitive to abusive molding conditions.

The reason for the unexpected synergism of the present invention is not known.

All patent (applications) mentioned herein are herewith incorporated by reference.

**Claims**

1. Polyester composition, polycarbonate composition or polyestercarbonate composition or polyester plus polycarbonate composition or polyester plus polyestercarbonate composition containing an impact modifier in an impact modifying amount, wherein the impact modifier is a synergistic mixture of (1) an ABS polymer and (2) a polymer derived from ethylene, a monomer (M) which contains a heretocyclic group containing one oxygen atom as the hetero-atom and optionally one or more further monomers.

2. Composition according to claim 1, wherein monomer (M) is glycidyl methacrylate.

3. Composition according to claim 1, wherein monomer (M) is maleic anhydride.

4. Composition according to claim 1, wherein component (2) is a copolymer of ethylene and a monomer (M).

5. Composition according to claim 1, wherein component (2) is a polymer comprising as further monomers one or more of the following: vinylacetate, vinylalcohol, styrene, acrylonitrile, lower alkyl acrylate and lower alkyl methacrylate.

6. Composition according to claim 1, wherein the weight ratio of component (1) and component (2) is 10:1 to 1:1.5.

7. Composition according to claim 6, wherein the ratio is 8:1 tot 1:1.

8. Composition according to claim 1 comprising further usual additives.

9. Composition according to any claim 1, wherein the synergistic mixture is present in a quantity of 6-25 weight percent with respect to the total quantity polymeric components.

10. Composition according to claim 9, wherein the synergistic mixture is present in a quantity of 10-20 weight percent.

11. Polyester composition not comprising a polycarbonate or a polyestercarbonate wherein the polyester has been derived from a diol, not being butanediol and an aromatic dicarboxylic acid.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 207 388 (BASF AG) <br> * claims 1-8; example 8 * <br> --- | 1,3-10 | C08L67/02 <br> C08L69/00 |
| X | EP-A-0 089 042 (SUMITOMO NAUGATUCK CO., LTD) <br> * claims 1-5; examples 1-5 * <br> --- | 1,2,4-10 | |
| X | EP-A-0 175 220 (MOBAY CORPORATION) <br> * claims 1-6 * <br> --- | 1,2,4-10 | |
| E | EP-A-0 491 985 (GENERAL ELECTRIC COMPANY) <br> * claims 1-11 * <br> ----- | 1-10 | |
| | | | TECHNICAL FIELDS SEARCHED (Int. Cl.5) |
| | | | C08L |

The present search report has been drawn up for all claims

| Place of search | Date of completion of the search | Examiner |
|---|---|---|
| THE HAGUE | 04 FEBRUARY 1993 | DECOCKER L. |

EPO FORM 1503 03.82 (P0401)